Europäisches Patentamt

European Patent Office

Office européen des brevets

(19)

(11) Veröffentlichungsnummer: **0 202 346 B1**

# EUROPÄISCHE PATENTSCHRIFT

(45) Veröffentlichungstag der Patentschrift: **07.08.91**

(51) Int. Cl.⁵: **E04D 11/00, A01G 9/00**

(21) Anmeldenummer: **85106065.7**

(22) Anmeldetag: **17.05.85**

---

(54) **Fertigelement mit Vegetation.**

---

(43) Veröffentlichungstag der Anmeldung:
**26.11.86 Patentblatt 86/48**

(45) Bekanntmachung des Hinweises auf die
Patenterteilung:
**07.08.91 Patentblatt 91/32**

(84) Benannte Vertragsstaaten:
**AT BE CH DE FR GB IT LI LU NL SE**

(56) Entgegenhaltungen:
**EP-A- 0 045 376**
**EP-A- 0 047 365**
**DE-A- 1 801 460**
**DE-A- 2 335 685**
**DE-A- 3 225 663**

**KUNSTSTOFFE IM BAU, Band 19, Nr. 1, 1984,
Seite 28, Carl Hanser Verlags, München, DE;
"Drei patentierte Systeme der Dachbegrünung"**

**KUNSTSTOFFE IM BAU, Band 19, Nr. 3, 1984,
Seiten 140-142, Carl Hanser Verlags, München, DE; F.J. BRAUN: "Dränung begrünter
Decken und Dächer mit EPS-Sickerplatten"**

**KUNSTSTOFFE IM BAU, Band 18, Nr. 2, 1983,
Seite 97, Carl Hanser Verlags, München, DE;**

**"Dachbegrünung technisch problemlos"**

(73) Patentinhaber: **Behrens, Wolfgang
Trespenmoor 25
W-2833 Gross Ippener(DE)**

(72) Erfinder: **Behrens, Wolfgang
Annen Nr. 2
W-2833 Gross Ippener(DE)**
Erfinder: **Stein, Jürgen
Falkenstrasse 36
W-2800 Bremen 1(DE)**

(74) Vertreter: **Thömen, Uwe, Dipl.-Ing.
Patentanwalt U. Thömen Zeppelinstrasse 5
W-3000 Hannover 1(DE)**

---

## Beschreibung

Die Erfindung betrifft ein Element mit Vegetation, insbesondere ein Element zum Auslegen von Dachflächen, gemäß dem Oberbegriff des Patentanspruchs 1.

Im Zusammenhang mit einem steigenden und geschärften Umweltbewußtsein werden bekanntlich schon seit einiger Zeit die Dächer - vorzugsweise Flachdächer - von Gebäuden begrünt. Neben der wichtigen ökologischen Bedeutung kommt der Dachbegrünung dabei auch in optischer Hinsicht eine bedeutsame Funktion zu.

Eine Dachbegrünung kann beim Neubau eines Hauses von Anfang an geplant und vorgesehen werden. Vielfach bietet sich die Dachbegrünung daneben aber auch an, wenn etwa ein bereits vorhandenes Flachdach wegen einer schadhaften Abdichtung oder dergleichen repariert und erneuert werden muß.

Sowohl bei einer nachträglichen Dachbegrünung als auch bei der Erst-Dachbegrünung müssen bekanntlich für das eigentliche Dach selbst bestimmte, in Bauvorschriften festgelegte Werte für die Wärmedämmung eingehalten werden, um die erforderlichen Wärmedurchlaßwiderstandswerte einzuhalten.

Dies gilt gleichermaßen für Dächer mit oben liegender Abdichtung als auch für Umkehrdächer, bei denen die Wärmedämmung bekanntlich oben liegt.

Obwohl eine Dachbegrünung selbst - also das Substrat mit der Wurzelschicht und die Pflanzen - einen gewissen Wärmedurchlaßwiderstand besitzt, darf dieser Wert bei der Festlegung der geforderten Dämmung aufgrund von DIN-Bestimmungen nicht berücksichtigt werden.

Wenn man daher eine Dachbegrünung vorsehen will, genügt es nicht, ein Substrat auf dem Dach aufzubringen und mit Pflanzen zu kultivieren. Vielmehr muß immer auf die Wärmedämmung geachtet werden, um die geforderten Wärmedurchlaßwiderstände zu erreichen.

Sogar wenn auf bereits vorhandenen Dächern nachträglich etwa im Wege einer Ausbesserung eine Dachbegrünung angelegt werden soll, muß gegebenenfalls nach den Baubestimmungen auch eine zusätzliche Wärmedämmung geschaffen werden. So ist es erforderlich, zunächst eine Wärmedämmung auf dem Dach zu verlegen und erst dann die eigentliche Dachbegrünung anzulegen, was als umständlich und zeitraubend einzustufen ist.

Ein weiterer Nachteil besteht darin, daß die Herstellung einer Dachbegrünung heute immer noch einen erheblichen Aufwand mit sich bringt und durchweg nur von Fachleuten vorgenommen werden kann.

Aus dem Dokument "Kunststoffe im Bau", Band 19, Nr. 1, 1984, Seite 28, rechte Spalte, ist zum Zwecke einer Wärmedämmung vor allem für die Altbausanierung von Dächern schon ein Fertigelement nach dem Oberbegriff des Anspruchs 1 bekannt, welches auf dem Dach verlegt werden kann. Das bekannte Fertigelement besitzt auf seiner unteren, dem Dach zugewandten Fläche Kontrollschächte, so daß Regenwasser bis zu einer bestimmten Höhe angestaut wird. Dieses Regenwasser gelangt dann über spezielle Düsen durch eine Verdunstung zum auf dem Fertigelement aufgebrachten Substrat.

Bei dieser vorbekannten Lösung ist es also - wie voranstehend schon beschrieben - erforderlich, zunächst die Elemente zur Erzielung einer gewünschten Wärmedämmung auf dem Dach zu verlegen. Im Anschluß daran muß die so geschaffene Wärmedämmungsschicht insgesamt mit einem Substrat oder dergleichen als Nährmedium für die Pflanzen beschichtet werden. Danach folgt dann die eigentliche Kultivierungsphase, bis die gewünschten Gräser bzw. Pflanzen gewachsen sind. Erst dann ist die Wärmedämmung mittels einer Dachbegrünung abgeschlossen.

Die voranstehend beschriebenen einzelnen aufeinanderfolgenden Maßnahmen zur Herstellung einer Dachbegrünung erfordern größte Sorgfalt und lassen sich in aller Regel nur von Fachleuten durchführen. Somit stellt eine Dachbegrünung mit dem Ziel einer gleichzeitigen Wärmedämmung abgesehen von der langen Herstellungsdauer auch einen erheblichen Kostenfaktor dar.

Durch die DE-A 3 225 663 ist zur Flach- oder Schrägdachbegrünung ein Drainageelement bekannt, welches eine für aufzubringende Pflanzboden undurchlässige, jedoch wasserdurchlässige, wahlweise wasserspeichernde Filtermatte besitzt, wobei unterseitig an der Filtermatte fein verteilte, dünne, abstützende Abstandshalter zum Begrenzen einer hochwirksamen, im wesentlichen wasserspeicherungsfreien Drainage mit weit überwiegendem Hohlraumanteil zwischen der Filtermatte und dem Untergrund vorgesehen sind. Die tragenden Abstandshalter sind als dochtartige Glieder ausgebildet, welche das Oberflächenwasser von dem Untergrund aufsaugen und zu der und/oder durch die Filtermatte aufwärts transportieren.

Das bekannte Drainageelement dient als Unterbau für einen Pflanzboden und hat die Aufgabe, das über dem Pflanzboden eintretende Oberflächenwasser wirksam und schnell abzuleiten, um ein unerwünschtes Anstauen von Wasser bei großen Wassermengen zu vermeiden. Zwar enthält das Drainageelement eine Filtermatte, jedoch spielt hier der Gesichtspunkt einer Wärmedämmung keine Rolle.

Insgesamt stehen den an sich positiven Aspekten einer Dachbegrünung in der Praxis immer noch gravierende Nachteile entgegen, die dazu führen, daß häufig auf eine vorteilhafte Dachbegrünung in Verbindung mit einer Wärmedämmung verzichtet wird.

Die Erfindung geht aus von einem Fertigelement nach dem Dokument "Kunststoffe im Bau", Band 19, Nr. 1, 1984, Seite 28, System "Floratherm".

Der Erfindung liegt die Aufgabe zugrunde, die beschriebenen Nachteile zu vermeiden und unter Einhaltung der für eine Dämmung vorgesehenen Vorschriften eine einfache und kostengünstige Möglichkeit einer Dachbegrünung zu schaffen. Die Lösung dieser Aufgabe erfolgt durch die im kennzeichnenden Teil des Anspruchs 1 angegebenen Merkmale.

Durch die Erfindung wird in neuartiger Weise ein plattenförmiges Fertigelement geschaffen, welches bereits fertig begrünt ist und außerdem wegen der als Basisplatte verwendeten Dämmplatte schon einen definierten Wärmedurchlaßwiderstand besitzt.

Für die Wärmedämmplatte kann in vorteilhafter Weise extrudiertes Polystyrol verwendet werden, welches nach den geltenden Vorschriften als Material für eine Wärmedämmplatte zugelassen ist und einen definierten Wärmedurchlaßwiderstand besitzt. Es steht also praktisch eine "biologische Dämmplatte" zur Verfügung, die den Vorteil besitzt, daß sie auch von einem Nicht-Fachmann leicht auf der Dachfläche durch einfaches Aneinanderlegen mehrerer Fertigelemente verlegt werden kann. Dadurch erhält man insgesamt eine begrünte Dachfläche, die neben der Begrünung auch die Forderung nach einem bestimmten Wärmedurchlaßwiderstand erfüllt.

Ein wesentlicher Gesichtspunkt der Erfindung ist der Umstand, daß eine Platte vorliegt, die deshalb als Fertigelement bezeichnet wird, weil sie bereits eine fertige Begrünung besitzt. Es entfällt damit die Kultivierungsphase auf dem Dach selbst.

Um dies zu erreichen, umfaßt die untere Basisplatte - die eigentliche Wärmedämmplatte - auf ihrer Oberfläche eine Strukturschicht, die in zweckmäßiger Ausgestaltung der Erfindung durch eine an sich bekannte Nylon-Schlingmatte mit Hohlräumen gebildet ist. Die Nylon-Schlingmatte ist mit einem Substrat verfüllt, welches als Nährmedium für Pflanzen, vorzugsweise für Gräser, dient.

Die Herstellung eines neuen Fertigelementes ist erst dann beendet, wenn das Substrat mit Pflanzen bewachsen ist, wenn also die eigentliche Kultivierungsphase bereits abgeschlossen ist.

Dem Anwender steht also ein plattenförmiges "biologisches Dämmelement" zur Verfügung, welches bereits eine Begrünung aufweist und zudem einen definierten Wärmedurchlaßwiderstand besitzt.

Die Handhabung und das Verlegen der Platten ist äußerst einfach, und eine zweckmäßige Ausgestaltung der Erfindung sieht vor, daß die Basisplatte mit Nut und Feder oder mit einem Stufenfalz versehen ist, so daß benachbarte verlegte Fertigelemente ineinandergreifen.

Darüber hinaus lassen sich die hergestellten plattenförmigen Fertigelemente mit einer Säge oder dergleichen leicht zuschneiden, so daß ein Verlegen der Fertigelemente auf einer Dachfläche insgesamt problemlos ist und auch von Nicht-Fachleuten ohne weiteres durchgeführt werden kann.

Ein weiterer Vorteil besteht darin, daß die Begrünung und das Substrat sowie die Schlingmatte eine Beschwerung für die relativ leichten Dämmplatten bilden, die üblicherweise aus extrudiertem Polystyrol bestehen. Es kann also die ansonsten noch extra erforderliche Beschwerung der leichten Dämmplatten beim Verlegen auf einer Dachfläche entfallen.

Wenn man für die Basisplatte ein als Dämmaterial zugelassenes Material mit einem vorgegebenen und definierten Wärmedurchlaßwiderstand verwendet, ermöglicht es die Erfindung, für eine Dachbegrünung Fertigelemente mit einer zugelassenen Wärmedämmung und zugleich mit einer Vegetation zur Verfügung zu stellen. Dem Publikum kann also eine Dachbegrünung mit zugelassenen Baustoffen und mit gewünschten Werten bezüglich des Wärmedurchlaßwiderstandes angeboten werden.

Weitere vorteilhafte Ausgestaltungen und zweckmäßige Weiterbildungen der Erfindung sind den Unteransprüchen zu entnehmen und in der Zeichnung dargestellt.

Nachfolgend wird die Erfindung anhand des in der Zeichnung gezeigten Ausführungsbeispiels näher erläutert. Es zeigen:

Fig. 1    eine Querschnittsansicht eines Fertigelementes, und

Fig. 2    eine perspektivische Ansicht einer Wärmedämmplatte, die Bestandteil eines Fertigelementes ist.

Das zeichnerisch dargestellte Fertigelement 10 besitzt als untere Basisplatte eine Wärmedämmplatte 12, die aus extrudiertem Polystyrol besteht. Ferner umfaßt das Fertigelement 10 eine Nylon-Schlingmatte 14, die mit einem Substrat 16 verfüllt ist, sowie bereits kultivierte Pflanzen (vorzugsweise Gräser) 18.

Die Schlingmatte 14 ist durch Verkleben mittels eines diffusionsoffenen Klebers an der Wärmedämmplatte 12 befestigt. Das Substrat 16 ist zum einen durch die maschenartige räumliche Struktur der Schlingmatte 16 gehalten, und zum anderen bilden die Wurzeln der Pflanzen bzw. Gräser 18 in dem Substrat 16 eine Wurzelschicht, welche gleichfalls eine Befestigung darstellen, so daß das Fertigelement 10 insgesamt als eine einteilige fertige Platte anzusehen ist.

Bei der Herstellung eines Fertigelementes 10 kann die Wärmedämmplatte 12 mit der aufgebrachten Schlingmatte 14 in einen in der Zeichnung nicht dargestellten Rahmen mit seitlichen Wänden gebracht werden, bevor die Schlingmatte 14 mit dem Substrat 16 verfüllt wird. Nach Abschluß der Kultivierungsphase, wenn also die Gräser 18 gewachsen sind und sich eine Wurzelschicht ausgebildet hat, wird der Rahmen entfernt, so daß das Fertigelement 10 zur Verfügung steht.

Die Schlingmatte 14 hält das Substrat 16 zusammen und ermöglicht auch die Ausbildung einer Wurzelschicht. Diese Funktion kann auch dadurch erfüllt werden, daß die Oberfläche der an sich ebenen und glatten Wärmedämmplatte 12 aufgeraut und strukturiert wird. Ferner ist es auch möglich, eine Strukturschicht durch Verwendung von Maschendraht oder eines Vlieses zu bilden.

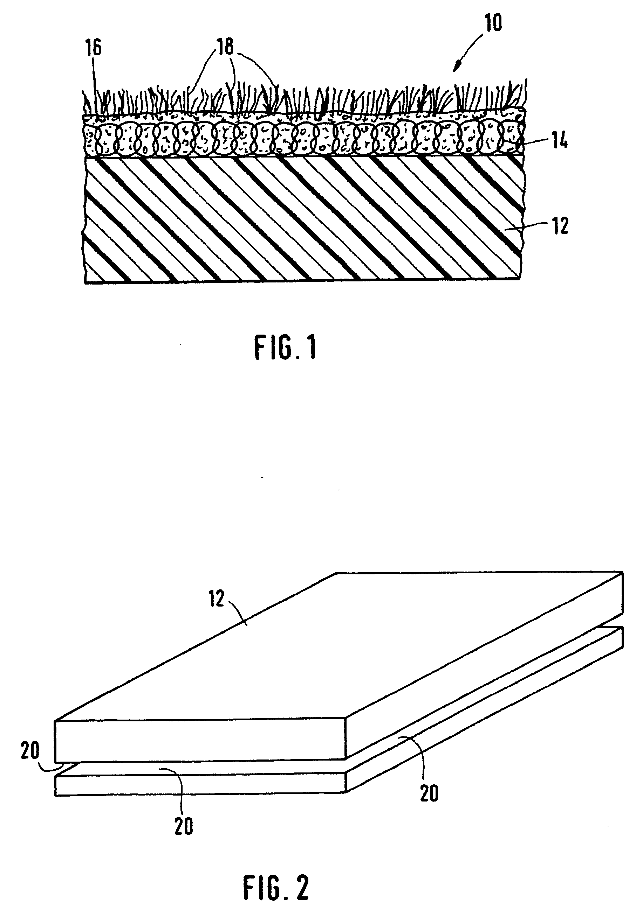

Beim Verlegen mehrerer Fertigelemente 10 auf der Fläche eines Daches können die einzelnen Fertigelemente 10 an ihren Seiten stumpf aneinander liegen. Zweckmäßig ist es auch, wenn die Wärmedämmplatte 12, die in Fig. 2 allein dargestellt ist, einen Stufenfalz 20 besitzt, so daß sich aneinanderliegende Fertigelemente 10 übergreifen bzw. daß sie ineinander greifen. Auch die Verwendung von Nut und Feder ist möglich.

## Patentansprüche

1. Fertigelement (10) mit Vegetation mit einer festen Basisplatte (12) aus Dämmaterial, insbesondere Fertigelement zum Auflegen auf Dachflächen, **dadurch gekennzeichnet**, daß die Oberfläche der Basisplatte (12) mit einer Strukturschicht (14) versehen ist, die ein Substrat (16) beinhaltet und begrünt (18) ist.

2. Element nach Anspruch 1, dadurch gekennzeichnet, daß die Strukturschicht (14) Bestandteil der Dämmplatte (12) ist, deren Oberfläche aufgeraut bzw. strukturiert ausgebildet ist.

3. Element nach Anspruch 1, dadurch gekennzeichnet, daß die Strukturschicht (14) durch eine mit der Dämmplatte (12) verbundene Estrichplatte gebildet ist.

4. Element nach Anspruch 1, dadurch gekennzeichnet, daß die Strukturschicht (14) durch eine an der Dämmplatte (12) befestigte Nylon-Schlingmatte gebildet ist.

5. Element nach Anspruch 4, dadurch gekennzeichnet, daß die Nylon-Schlingmatte (14) mittels eines diffusionsoffenen Klebers mit der Dämmplatte (12) verklebt ist.

6. Element nach Anspruch 1, dadurch gekennzeichnet, daß die Strukturschicht (14) durch ein mit der Dämmplatte (12) verbundenes Vlies gebildet ist.

7. Element nach Anspruch 1, dadurch gekennzeichnet, daß die Strukturschicht (14) durch eine oder mehrere Lagen Maschendraht gebildet sind.

8. Element nach einem der vorhergehenden Ansprüche 1 - 7, dadurch gekennzeichnet, daß die Dämmplatte (12) aus extrudiertem Polystyrol besteht.

9. Element nach einem der vorhergehenden Ansprüche 1 - 8, dadurch gekennzeichnet, daß die Dämmplatte (12) an ihren Seiten einen zumindest teilweise umlaufenden Stufenfalz (20) besitzt.

10. Element nach einem der vorhergehenden Ansprüche 1 - 8, dadurch gekennzeichnet, daß die Dämmplatte (12) an ihren Seiten Nut und/oder Feder besitzt.

11. Element nach einem der vorhergehenden Ansprüche 1 - 10, dadurch gekennzeichnet, daß das Substrat (16) mit Gras (18) bewachsen ist.

12. Element nach einem der vorhergehenden Ansprüche 1 - 11, dadurch gekennzeichnet, daß die Nylon-Schlingmatte (14) mechanisch an der Dämmplatte (12) befestigt ist.

13. Element nach einem der vorhergehenden Ansprüche 1 - 12, dadurch gekennzeichnet, daß das Substrat (16) mit Moosen oder dergleichen Vegetation bewachsen ist.

## Claims

1. Prefabricated element (10) comprising vegetation with a solid base slab (12) of insulating material, especially prefabricated element for laying on roof surfaces, characterized in that the surface of the base slab (12) is provided with a fabric layer (14), which contains a substrate (16) and is greened (18).

2. Element according to Claim 1, characterized in that the fabric layer (14) is a constituent of the insulating plate (12), the surface of which is formed roughened or structured.

3. Element according to Claim 1, characterized in that the fabric layer (14) is formed of a floor-finish plate connected to the insulating plate (12).

4. Element according to Claim 1, characterized in that the fabric layer (14) is formed of a nylon looped mat fixed to the insulating plate (12).

5. Element according to Claim 4, characterized in that the nylon looped mat (14) is bonded by a diffusion-permitting adhesive to the insulating plate (12).

6. Element according to Claim 1, characterized in that the fabric layer (14) is formed of a non-woven connected to the insulating plate (12).

7. Element according to Claim 1, characterized in that the fabric layer (14) is formed of one or more layers of wire mesh.

8. Element according to one of the preceding Claims 1 to 7, characterized in that the insulating plate (12) consists of extruded polystyrene.

9. Element according to one of the preceding Claims 1 to 8, characterized in that the insulating plate (12) possesses, along its sides, a groove (20) extending at least partly around it.

10. Element according to one of the preceding Claims 1 to 8, characterized in that the insulating plate (12) possesses, along its sides, a tongue and/or groove.

11. Element according to one of the preceding Claims 1 to 10, characterized in that the substrate (16) has a grass growth (18).

12. Element according to one of the preceding Claims 1 to 11, characterized in that the nylon looped mat (14) is mechanically connected to the insulating plate (12).

13. Element according to one of the preceding Claims 1 to 12, characterized in that the substrate (16) has a growth of mosses or similar vegetation.

**Revendications**

1. Elément préfabriqué (10) avec végétation, avec une plaque de base fixe (12) en matière isolante, destiné en particulier à être posé sur des pans de comble, caractérisé en ce que la surface de la plaque de base (12) est pourvue d'une couche structurée (14) qui contient un substrat (16) et est gazonné (18).

2. Elément suivant revendication 1, caractérisé en ce que la couche structurée (14) est une partie intégrante de la plaque isolante (12) dont la surface est conçue rugueuse ou structurée.

3. Elément suivant revendication 1, caractérisé en ce que la couche structurée (14) est constituée par une plaque de plancher en plâtre reliée à la plaque isolante (12).

4. Elément suivant revendication 1, caractérisé en ce que la couche structurée (14) est constituée par une natte bouclée en nylon fixée à la plaque isolante.

5. Elément suivant revendication 4, caractérisé en ce que la natte bouclée en nylon (14) est collée à la plaque isolante (12) au moyen d'une colle ouverte à diffusion.

6. Elément suivant revendication 1, caractérisé en ce que la couche structurée (14) est constituée par un non-tissé relié à la plaque isolante (12).

7. Elément suivant revendication 1, caractérisé en ce que la couche structurée (14) est constituée par une ou plusieurs couches en treillis de fils métalliques.

8. Elément suivant une des revendications précédentes 1 - 7. caractérisé en ce que la plaque isolante (12) est en polystyrol extrudé.

9. Elément suivant une des revendications précédentes 1 - 8, caractérisé en ce que la plaque isolante (2) possède, sur ses côtés, une feuillure en forme d'étage (20) l'entourant au moins partiellement.

10. Elément suivant une des revendications précédentes 1 - 8, caractérisé en ce que la plaque isolante (12) possède, sur ses côtés, une rainure et/ou une languette.

11. Elément suivant une des revendications précédentes 1 - 10, caractérisé en ce que le substrat (16) est gazonné (18).

12. Elément suivant une des revendications précédentes 1 - 11, caractérisé en ce que la natte bouclée en nylon (14) est mécaniquement fixée à la plaque isolante (12).

13. Elément suivant une des revendications précédentes 1 - 12, caractérisé en ce que le substrat (16) est recouvert de mousses ou d'une végétation similaire.

FIG. 1

FIG. 2

6